# EUROPÄISCHE PATENTSCHRIFT

(11) **EP 2 010 879 B1**
(45) Veröffentlichungstag und Bekanntmachung des Hinweises auf die Patenterteilung: **11.02.2015**
(21) Anmeldenummer: 07724380.6
(22) Anmeldetag: 19.04.2007
(51) Int. Cl.: G01K 1/02

(54) **VORRICHTUNG ZUR MESSUNG DER GAS- ODER LUFTTEMPERATUR IN EINEM GEHÄUSE**
DEVICE FOR MEASURING GAS OR AIR TEMPERATURE IN A CASING BOX
DISPOSITIF DE MESURE DE LA TEMPÉRATURE DU GAZ OU DE L'AIR DANS UN BOÎTIER

(30) Priorität: 27.04.2006 DE 102006019578
(43) Veröffentlichungstag der Anmeldung: 07.01.2009
(73) Patentinhaber: ABB AG, 68309 Mannheim (DE)
(72) Erfinder: KRATSCHMAR, Rudiger, 68542 Heddesheim (DE); GRAF, Ralf, 68259 Mannheim (DE); MERKEL, Hans-Peter, 69198 Schriesheim (DE)
(86) Internationale Anmeldenummer: PCT/EP2007/003443
(87) Internationale Veröffentlichungsnummer: WO 2007/124871

(56) Entgegenhaltungen:
- DE-A1- 4 123 870
- GB-A- 2 284 261
- US-A- 5 261 747

## Beschreibung

Die Erfindung betrifft eine Vorrichtung gemäß dem Oberbegriff des Anspruches 1.

Derartige Schaltschränke für Niederspannung besitzen einen Rahmen aus Profilstäben, die von damit verbundenen Wänden, nämlich Seitenwänden, einer Rückwand, einer Deckwand und einer Bodenwand abgeschlossen sind. Innerhalb des Schaltschrankes, der mittels einer Tür von außen verschließbar ist, befinden sich in unterschiedlichen Ebenen liegende Einschübe, auf denen selbst wiederum elektrische Geräte, wie beispielsweise Steuer-, Schalt- und Regelgeräte aufgebracht sind. Diese Geräte erzeugen Wärme, die die Luft oder das Gas innerhalb des Schaltschrankes erwärmen, wobei sich eine thermische Konvektionsströmung innerhalb des Schaltschrankes ausbildet.

Zur Messung der Luft- oder Gastemperatur befindet sich an jedem Einschub ein Temperaturmessfühler, wobei dieser am Boden im oberen Bereich des Einschubes angebracht ist und zwar dort, wo für diesen Fühler ausreichend Platz vorhanden ist. Dies bedeutet, dass dann, wenn ein Gerät, das vom Temperaturmessfühler entfernt angeordnet ist und gegebenenfalls sich zwischen dem betreffenden Gerät und dem Temperaturmessfühler ein weiteres Gerät befindet, sich unzulässig erwärmt, eine Veränderung der Temperatur des ersten Gerätes von dem Temperaturmessfühler nur mit großer Verzögerung detektiert wird. Dabei wird lediglich festgestellt, dass die Temperatur innerhalb des Schaltschrankes erhöht ist; nicht detektierbar ist hierdurch, welches Gerät gegebenenfalls in welchem Einschub unzulässig hohe Temperaturen erreicht hat.

Aus der DE 41 23 870 A1 ist ein Verfahren zur Überwachung elektronischer Baugruppen und eine Vorrichtung zur Durchführung des Verfahrens bekannt geworden, bei dem Thermomesselemente gitterförmig im Inneren einer Platine angeordnet sind, wobei auf der Platine selbst dann die elektronischen Baugruppen aufgesetzt sind. Es handelt sich bei der DE 41 23 870 A1 um eine Vorrichtung, bei der die Thermomesselemente integraler Bestandteil der Platine für die Baugruppen ist. Eine Messung der Luft oder des Gases, die von den Bauteilen erwärmt werden könnte, ist hier nicht dargestellt.

Aus der US-5 261 747 A ist eine thermoelektrische Anordnung mit Messelementen als Prototyp bekannt geworden, bei der den einzelnen Thermoelementen Schornsteine ("chimneys") zugeordnet sind, durch die den Thermoelementen gezielt Luft zugeführt werden kann, die nicht durch ein elektrische Bauteil, sondern durch eine Lötkolbenspitze erzeugt wird. In der Hauptsache wird die in der US 5 261 747 A beschriebene Anordnung zur Messung in Mikrosystemen verwenden; für eine Anwendung in sogenannten Makrosystemen werden die Thermoelemente auf ein flexibles Medium aufgebracht, das dann um das zu messende Bauteil herumgelegt werden kann. Die Überwachung von elektrischen Bauteilen durch aufsteigende Luft ist nicht beschrieben.

Aufgabe der Erfindung ist es, eine Vorrichtung der Eingangs genannten Art zu schaffen, mit der eine genaue Detektierung eines unzulässige Temperaturen erzeugenden Gerätes ermöglicht wird.

Diese Aufgabe wird erfindungsgemäß gelöst durch die Merkmale des Anspruches 1.

Erfindungsgemäß ist somit oberhalb der Geräte etwa in einer Ebene eine Temperaturmessanordnung vorgesehen, die mehrere Temperaturmessfühler aufweist, die an matrixartig angeordneten, gleichmäßig verteilten Plätzen angeordnet sind und mit denen die Temperatur der aufsteigenden Luft oder des Gases gemessen werden.

Die Erfindung macht sich zu nutze, dass die von den Geräten erwärmte Luft oder das erwärmte Gas aufsteigt und dadurch eine Konvektionsströmung innerhalb des Gehäuses erzeugt wird. Wenn nun die Temperaturmessfühler oder Temperaturfühler oberhalb der Geräte angeordnet sind, dann können die Temperaturfühler oberhalb jenes Gerätes, welches sich unzulässig erwärmt hat, die erhöhte Temperatur unmittelbar detektieren; eine Zeitverzögerung zwischen dem Beginn der unzulässigen Erwärmung des betreffenden Gerätes und dem Ansprechen des Temperaturfühlers aufgrund einer durch eine Konvektion erzeugte Gas- oder Luftdurchmischung innerhalb des Gehäuses, die eine gewisse Zeit in Anspruch nimmt, ist dadurch vermieden.

In besonders vorteilhafter Weise kann ein Träger vorgesehen sein, an dem die Temperaturfühler angebracht sind.

Zur gleichmäßigen Verteilung der Temperaturfühler sind diese am Träger netz- oder gitterförmig angeordnet. Dadurch wird erreicht, dass sich in jedem Falle ein Temperaturmessfühler oberhalb jedes Gerätes befindet.

Die Temperaturmessfühler können als Thermosensoren ausgebildet sein, die an einem Träger befestigt sind; die Temperaturmessfühler können auch als Widerstandsdrähte mit unterschiedlichen Widerstandswerten ausgebildet sein, die netzförmig in einer Ebene angeordnet sind und aus einem Material besteht, dessen Widerstand sich mit ändernder Temperatur ändert.

Die Temperaturmessanordnung mit den einzelnen Temperaturmessfühlern oder Temperaturfühlern ist eine zwei- dimensionale Messanordnung, die überall dort angewendet werden kann, wo mehrere Geräte auf Temperaturerhöhungen zu überwachen sind.

Dadurch, dass die Widerstandsdrähte netzförmig angeordnet sind, kann festgestellt werden, in welchem Bereich die Temperatur übermäßig ansteigt, so dass eine entsprechende Ansteuerung eines Schaltgerätes vorgenommen oder eine Alarmeinrichtung angesteuert werden kann.

Weitere vorteilhafte Ausgestaltungen und Verbesserungen der Erfindung sind den weiteren Unteransprüchen zu entnehmen.

Anhand der Zeichnungen, in denen einige Ausführungsbeispiele dargestellt sind, sollen die Erfindung sowie weitere vorteilhafte Ausgestaltungen und Verbesserungen der Erfindung und weitere Vorteile näher erläutert und beschrieben werden.

Es zeigen:
- Fig. 1: eine Einsicht in einen Einschub, wie er in einem Niederspannungsschaltschrank eingesetzt ist,
- Fig. 2: einen erfindungsgemäßen Einschub im Querschnitt entsprechend Schnittlinie II-II der Fig. 1 und
- Figuren 3 bis 5: drei unterschiedliche Ausführungsbeispiele der Erfindung.

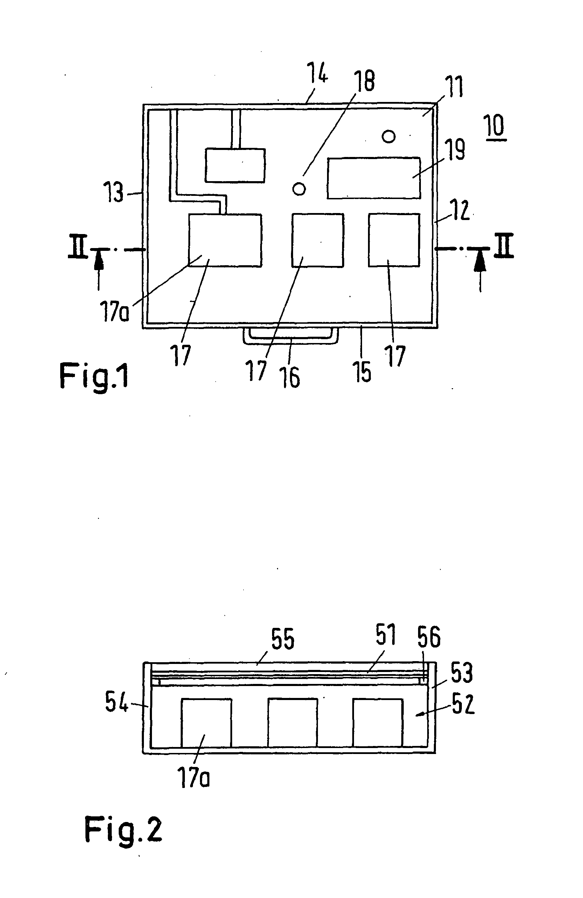

Es sei nun Bezug genommen auf die Fig. 1. Dort ist ein Einschub 10 in Aufsicht dargestellt, wie er in einem Niederspannungsschaltschrank eingesetzt sein kann. Dieser Einschub besitzt ein Bodenblech 11 sowie senkrecht an den Kanten des Bodenbleches 11 vorspringende Wandungen 12, 13, die die Seitenwandungen bilden, sowie Wandungen 14 und 15, von denen die Wandung 14 die Rückwand und die Wandung 15 die Frontwand bildet, an der ein Handgriff 16 angebracht ist. Auf der Bodenplatte 11 sind mehrere elektrische Steuer-, Schalt- und Regelgeräte 17 angeordnet, die als elektrische Geräte vom Strom durchflossen sind und dabei auch Wärme erzeugen. Normalerweise befindet sich in dem Schaltschrank, in dem sich der Einschub befindet, Luft, wobei der Schaltschrank zur Umgebungsatmosphäre geschlossen, aber nicht hermetisch und gasdicht gekapselt ist.

Die Einwirkung der elektrischen Geräte auf die innerhalb des Schaltschrankes befindliche Atmosphäre führt zu einer Konvektion, so dass die erwärmte Luft aufsteigt und eine Art Zirkulationsströmung innerhalb des Schaltschrankes oder gegebenenfalls auch, je nach Ausgestaltung des Bodenblechs 11, innerhalb des einzelnen Einschubs erzeugt.

Zur Messung der hierbei entstehenden Lufttemperaturen ist beim Stand der Technik ein Temperatursensor 18 vorgesehen, der bei der Ausgestaltung gemäß dem Ausführungsbeispiel nach Fig. 1 etwa mittig am Einschub 10 angeordnet ist. Temperaturerhöhungen beispielsweise in dem rechts befindlichen Schaltgerät oder Steuergerät 17 werden von dem Temperatursensor 18 erst nach einer gewissen Verzögerungszeit detektierL

Die Anordnung des Temperatursensors 18 bei den derzeit hergestellten und in Gebrauch befindlichen Schaltanlagen oder Einschüben ist im wesentlichen abhängig von der Platzverteilung innerhalb des Einschubes.

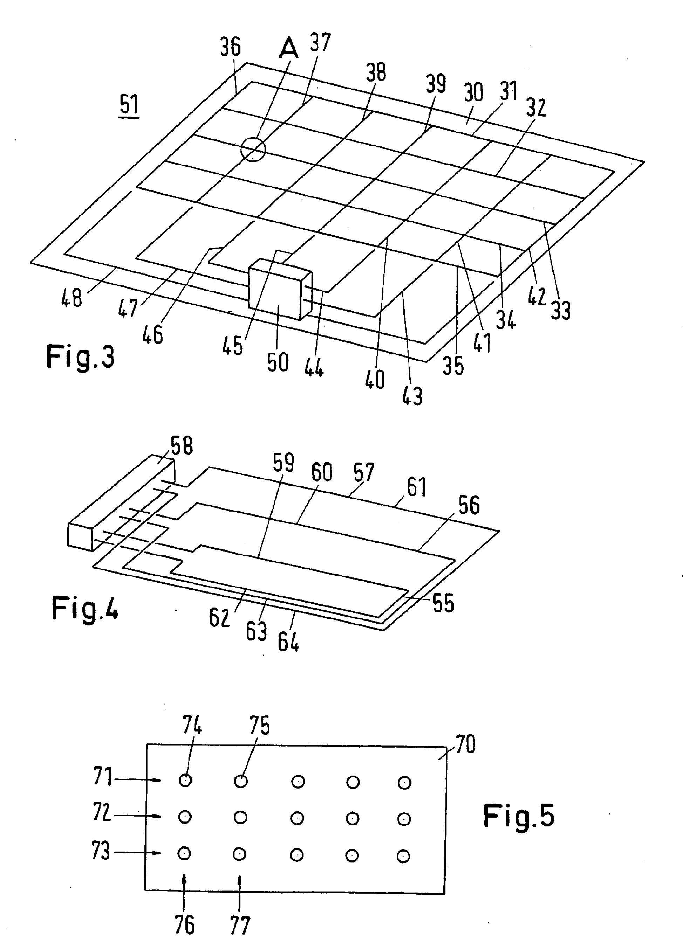

Es sein nun Bezug genommen auf die Fig. 3.

Auf einem Träger 30 sind Widerstandsdrähte 31, 32, 33, 34 und 35 angeordnet, die in einem Abstand und parallel zueinander verlaufen und die jeweils unterschiedliche Widerstandswerte besitzen. Senkrecht zu den Widerstandsdrähten 31 bis 35 sind weitere Widerstandsdrähte angeordnet, die ebenfalls parallel zueinander und in Abstand zueinander verlaufen. Über Verbindungsleitungen 43 bis 48 sind die Widerstandsdrähte mit einer Auswerteeinrichtung 50 verbunden, wobei hier lediglich nur die Verbindungsleitungen 43 bis 48 von den Widerstandsdrähten 36 bis 42 zu der Auswerteeinrichtung dargestellt sind; die entsprechenden Verbindungsleitungen zwischen den Widerstandsdrähten 31 bis 35 und der Auswerteeinrichtung 50 sind der Übersichtlichkeit halber nicht dargestellt. Diese Temperaturmesseinheit 51 ist in den in der Fig. 2 gezeigten Einschub 52 eingesetzt, wobei der Einschub 52 an den Innenseiten der Wände 53, 54 und 55 umlaufende Leisten 56 aufweist, deren lichte Weite kleiner ist als der Außenumfang der Sensoranordnung 51, so dass die Sensoranordnung oder Temperaturmesseinheit 51 auf die umlaufende Leiste 56 aufgelegt werden kann.

Es ist selbstverständlich, dass der Träger 30 ausreichend große Durchbrechungen, die ebenfalls nicht dargestellt sind, aufweisen muss, damit die von den elektrischen Geräten 17 und 19 erwärmte Luft an den Widerstandsdrähten 31, 32, 33, 34, 35 vorbeiströmen kann.

Bei der Ausführung nach Fig. 3 verlaufen die Widerstandsdrähte 31, 32, 33, 34 und 35 parallel zu der Frontwand des Einschubes 10 und die anderen Widerstandsdrähte 36 bis 42 senkrecht dazu, was Vorteile bringt, wie weiter unten näher erläutert werden soll. Es besteht natürlich auch ohne weiteres die Möglichkeit, die Widerstandsdrähte so anzuordnen, dass sie unter einem Winkel ungleich 90° zueinander verlaufen. Dies hängt im Wesentlichen von der Anordnung der Geräte 17, 17a und 19 im Einschub 10 ab.

Es sei nun angenommen, dass das in der Zeichnung Fig. 2 links gezeichnete elektrische Gerät 17a sich übermäßig erwärmt. Da sich das Gerät 17 a unterhalb des Widerstandsdrahtes 37 und etwa unterhalb des Widerstandsdrahtes 33 befindet, werden diese beiden Widerstandsdrähte stärker erwärmt als die übrigen Widerstandsdrähte, weil die von dem Gerät 17 a erwärmte Luft unmittelbar direkt an den besagten Widerstandsdrähten vorbeiströmt. Dadurch werden sich die Widerstände oder Widerstandswerte der beiden Widerstandsdrähte 37 und 33 verändern und die Auswerteeinrichtung 50 detektiert den Bereich A, also den Kreuzungsbereich der Widerstandsdrähte 37 und 33, als einen Bereich erhöhter Temperatur und meldet dies an eine übergeordnete Zentraleinheit, welche dann gegebenenfalls weitere Aktionen veranlasst.

Die Fig. 3 zeigt eine Anordnung mit vergleichsweise vielen Widerstandsdrähten; die Anzahl der Widerstandsdrähte hängt von der Größe der zu überdeckenden Fläche und gegebenenfalls von der Anzahl der innerhalb des Einschubes befindlichen elektrischen Geräten ab. Selbstverständlich mögen jeweils auch nur zwei Widerstandsdrähte oder drei in jeder Richtung angeordnet sein.

Die einzelnen Widerstandsdrähte sind aus einem Material hergestellt, dessen Widerstandswert sich mit steigender Temperatur verändert. Dabei können alle Widerstandsdrähte aus dem gleichen Material hergestellt sein oder aus unterschiedlichen Materialien, die unterschiedlichen Widerstandswerte aufweisen.

Die Fig. 4 zeigt eine Anordnung von drei Widerstandsdrähten aus gleichem Material, die in Form einer kleinen Schleife 55, einer mittleren Schleife 56 und einer großen Schleife 57 angeordnet sind. Dabei besitzen aufgrund der Drahtlänge die kleine Schleife einen Widerstand R1, die mittlere Schleife 56 einen Widerstandswert R2 und die große Schleife 57 einen Widerstandswert R3 Die Anordnung der Schleifen 55 bis 57 ist so getroffen, dass die Schleifen lang gestreckt rechteckig ausgebildet sind, wobei die Abschnitte 59, 60 und 61 der Schleifen 55 bis 57 oberhalb des Einschubes verlaufen, wogegen die anderen Abschnitte 62 bis 64, die parallel zu den Abschnitten 59 bis 61 verlaufen, im Bereich einer der Seitenwände des Einschubes verlegt sind. Die Abschnitte 59, 60 und 61 verlaufen parallel zueinander in gleichem Abstand, so dass die drei Abschnitte 59 bis 61 gleichmäßig über den Einschub verteilt sind. Die Abschnitte 62, 63 und 64 können vorzugsweise parallel zur Frontwand 15 des Einschubes verlaufen. Die Enden der Schleifen 55, 56 und 57 sind mit einer Auswerteinheit 58 verbunden, in denen die Widerstandswerte der einzelnen Schleifen detektiert werden.

Bei der in Fig. 4 dargestellten Anordnung kann lediglich ein Linienbereich, nämlich der Linien bereich unterhalb der Abschnitte 59 bzw. 60 oder 61 überwacht werden; es besteht natürlich auch die Möglichkeit, eine Anordnung wie die in der Fig. 4 dargestellte so anzuordnen, dass die den Abschnitten 59, 60 und 61 entsprechenden Abschnitte senkrecht zu den Abschnitten 59, 60 und 61 verlaufen, wodurch ebenfalls wieder eine netz-oder gitterförmige Struktur wie die in Fig. 3 dargestellte Struktur erzeugt wird. Die Enden der Schleifen der zweiten Anordnung sind mit der Auswerteinheit 58 ebenfalls verbunden.

Die Fig. 5 zeigt eine weitere Ausgestaltung der Erfindung. Auf einem Träger 70 sind in jeweils ersten Reihen 71, 72 und 73 Temperatursensoren 74, 75 etc. angeordnet, wobei die Temperatursensoren 74 der drei Reihen 71 bis 73 eine senkrecht dazu verlaufende Reihe 76 bilden, die parallel zu weiteren Reihen 77 die durch die Temperatursensoren 75 der Reihen 71 bis 73 gebildet sind, verläuft. Der Träger 70 besitzt selbstverständlich Öffnungen, die eine im wesentlichen verlustfreie Strömung von den darunter liegenden elektrischen Geräten zu den Thermosensoren 74, 75 ermöglichen.

Anstatt der Anordnung der Temperaturfühler 74, 75 wie in Fig. 5 dargestellt, können die Temperaturfühler auch auf andere Weise gleichmäßig oberhalb des Einschubes 10 verteilt sein, wodurch im Endeffekt die gleiche Messwirkung erzielt wird wie bei der Anordnung gemäß Fig. 5 oder den Anordnungen gemäß den Figuren 3 und 4.

Bei der Anordnung gemäß Fig. 5 sind drei erste Reihen 71, 72 und 73 und fünf zweite, senkrecht dazu verlaufende Reihen 76, 77 (die drei weiteren Reihen sind nicht mit Bezugsziffern versehen) vorgesehen, es besteht natürlich auch die Möglichkeit, die Anzahl der Sensoren zu vergrößern oder zu verkleinern, je nach Größe des Einschubs.

Die Erfindung ist anhand eines Einschubes eines elektrischen Niederspannungsschaltschrankes beschrieben; die Vorrichtung zur Messung der Gas- oder Lufttemperatur kann überall dort eingesetzt werden, wo unterschiedliche, Wärme erzeugende Geräte angeordnet sind, deren Temperatur gemessen und überwacht werden muss. Dies kann auch in einer elektronischen Datenverarbeitungseinrichtung der Fall sein; dort könnte insbesondere eine Ausführung gemäß den Figuren 3 und 4 als Drahtgeflecht vorgesehen sein.

Mit der Erfindung wird erreicht, dass eine Temperaturüberwachung und- Erfassung zweidimensional erfolgt, wobei die einzelnen Tempe.raturfühler in etwa in einer Ebene angeordnet sind. Demgemäß kann die Erfindung überall in solchen Räumen eingesetzt und angewendet werden, in denen eine zweidimensionale Temperaturerfassung erforderlich ist und in denen Geräte untergebracht sind, die im Fehlbetrieb höhere Temperaturen erzeugen.

Der Träger kann eine Platine sein; es besteht natürlich auch die Möglichkeit, eine Trägerfolie zu verwenden oder die Widerstandsdrähte einfach an einem Rahmen einzuspannen.

## Patentansprüche

1. Vorrichtung zur Messung der Gas- oder Lufttemperatur in einem Gehäuse einer elektrischen Niederspannungsschaltanlage, in dem sich unterschiedliche, wärmeerzeugende Geräte befinden,
**dadurch gekennzeichnet, dass**
oberhalb der Geräte (17, 17a, 19) etwa in einer Ebene eine Temperaturmessanordnung (51) vorgesehen ist, die mehrere Temperaturfühler (31, 32, 33, 34, 35; 36, 37, 38, 39, 40, 41, 42) aufweist, die an matrixartig angeordneten, gleichmäßig verteilten Plätzen angeordnet sind, und mit denen die Temperaturen der aufsteigenden Luft oder des Gases gemessen werden.

2. Vorrichtung nach Anspruch 1, **dadurch gekennzeichnet, dass** ein Träger (30, 70) vorgesehen ist, an dem die Temperaturfühler (31, 32,...; 36, 37,.,.; 55, 56, 57; 74, 75) angebracht sind.

3. Vorrichtung nach Anspruch 2, **dadurch gekennzeichnet, dass** die Temperaturfühler (31, 32,...; 36, 37,...; 55, 56, 57; 74, 75) am Träger (30, 70) netz- oder gitterförmig angebracht sind, so dass die Temperaturfühler etwa gleichmäßig oberhalb des Gehäuses (10) in diesem verteilt angeordnet sind.

4. Vorrichtung nach Anspruch 3, **dadurch gekennzeichnet, dass** die Temperaturfühler (31, 32,...; 36, 37,...; 55, 56, 57; 74, 75) in Längs- und Querreihen oberhalb des Gehäuses angeordnet sind, wobei die Längs- und Querreihen etwa parallel und quer zur Frontwand des Gehäuses verlaufen.

5. Vorrichtung nach Anspruch 4, **dadurch gekennzeichnet, dass** der Träger (30, 70) eine Platine ist.

6. Vorrichtung nach Anspruch 4, **dadurch gekennzeichnet, dass** der Träger (30, 70) eine Folie ist.

7. Vorrichtung nach einem der vorigen Ansprüche, **dadurch gekennzeichnet, dass** der Träger (30, 70) eine Gitterform aufweist, an deren Gitterpunkten die Temperaturfühler (31, 32...., 36, 37, 38....; 55, 56, 57; 74, 75) befestigt sind.

8. Vorrichtung nach Anspruch 7, **dadurch gekennzeichnet, dass** die Widerstandsdrähte gleiche oder unterschiedliche Durchmesser und/oder gleiche oder unterschiedliche Längen aufweisen.

9. Vorrichtung nach Anspruch 5, **dadurch gekennzeichnet, dass** die Widerstandsdrähte aus gleichem Material mit gleichen oder unterschiedlichen Durchmessern und/oder Längen gebildet sind.

10. Vorrichtung nach einem der Ansprüche 1 bis 9, **dadurch gekennzeichnet, dass** die Widerstandsdrähte netz- oder gitterförmig angeordnet sind.

11. Vorrichtung nach einem der Ansprüche 1 bis 9, **dadurch gekennzeichnet, dass** erste Widerstandsdrähte zur Bildung unterschiedlicher Längen zu Schleifen (55, 56, 57) geformt sind, die vorzugsweise eine viereckige Flächenform umgeben, wobei die ersten Seitenkanten (62, 63, 64) jeder Flächenform nahe beieinander liegen und die zweiten, parallel dazu verlaufenden Seitenkanten (59, 60, 61) in Abstand zueinander verlaufen, so dass diese zweiten Seitenkanten (59, 60, 61) über dem Gehäuse verteilt angeordnet sind.

12. Vorrichtung nach Anspruch 11, **dadurch gekennzeichnet, dass** zusätzlich zu den ersten Widerstandsdrähten zweite Widerstandsdrähte vorgesehen sind, deren erste und zweite Seitenkanten senkrecht zu den ersten und zweiten Seitenkanten der ersten Widerstandsdrähte verlaufen.

13. Verwendung der Vorrichtung nach einem der vorigen Ansprüche in einem elektrischen Niederspannungsschaltschrank, insbesondere in einem Einschub (10) eines Niederspannungsschaltschrankes, in dem Temperaturen der einzelnen elektrischen Geräte (17, 17a, 19) überwacht werden, so dass dann, wenn die Temperaturen der an den Temperaturfühlern vorbeiströmenden Luft oder des an den Temperaturfühlern vorbeiströmenden Gases einen Schweliwert überschreitet, ein Alarmsignal von einer Auswerteeinheit abgegeben wird.

## Claims

1. Device for measuring gas or air temperature in a casing box of an electrical low-voltage switchgear assembly in which different heat-generating units are situated, **characterized in that** a temperature-measuring arrangement (51) is provided above the units (17, 17a, 19) approximately on one plane and has a plurality of temperature sensors (31, 32, 33, 34, 35; 36, 37, 38, 39, 40, 41, 42) which are arranged at spaces arranged in the form of a matrix in a uniformly distributed manner and are used to measure the temperatures of the rising air or the gas.

2. Device according to Claim 1, **characterized in that** provision is made of a carrier (30, 70) to which the temperature sensors (31, 32, ...; 36, 37, ...; 55, 56, 57; 74, 75) are fitted.

3. Device according to Claim 2, **characterized in that** the temperature sensors (31, 32, ...; 36, 37, ...; 55, 56, 57; 74, 75) are fitted to the carrier (30, 70) in the form of a mesh or grid, with the result that the temperature sensors are arranged above the casing box (10) in an approximately uniform manner and are distributed in the latter.

4. Device according to Claim 3, **characterized in that** the temperature sensors (31, 32, ...; 36, 37, ...; 55, 56, 57; 74, 75) are arranged in longitudinal and transverse rows above the casing box, the longitudinal and transverse rows running approximately parallel and transverse to the front wall of the casing box.

5. Device according to Claim 4, **characterized in that** the carrier (30, 70) is a printed circuit board.

6. Device according to Claim 4, **characterized in that** the carrier (30, 70) is a film.

7. Device according to one of the preceding claims, **characterized in that** the carrier (30, 70) has a grid shape to whose grid points the temperature sensors (31, 32, ..., 36, 37, 38, ...; 55, 56, 57; 74, 75) are fastened.

8. Device according to Claim 7, **characterized in that** the resistance wires have the same or different diameters and/or the same or different lengths.

9. Device according to Claim 5, **characterized in that** the resistance wires are formed from the same material with the same or different diameters and/or lengths.

10. Device according to one of Claims 1 to 9, **characterized in that** the resistance wires are arranged in the form of a mesh or grid.

11. Device according to one of Claims 1 to 9, **characterized in that**, in order to form different lengths, first resistance wires are shaped to form loops (55, 56, 57) which preferably surround a square area form, the first side edges (62, 63, 64) of each area form being close to one another and the second side edges (59, 60, 61) which run parallel to said first side edges running at a distance from one another, with the result that these second side edges (59, 60, 61) are arranged above the casing box in a distributed manner.

12. Device according to Claim 11, **characterized in that**, in addition to the first resistance wires, provision is made of second resistance wires whose first and second side edges run perpendicular to the first and second side edges of the first resistance wires.

13. Use of the device according to one of the preceding claims in an electrical low-voltage switchgear cabinet, in particular in a withdrawable part (10) of a low-voltage switchgear cabinet, in which temperatures of the individual electrical units (17, 17a, 19) are monitored, with the result that, when the temperature of the air flowing past the temperature sensors or of the gas flowing past the temperature sensors exceeds a threshold value, an alarm signal is emitted by an evaluation unit.

## Revendications

1. Ensemble de mesure de la température de gaz ou d'air dans le boîtier d'une installation électrique de raccordement à basse tension dans lequel se trouvent plusieurs appareils dégageant de la chaleur, **caractérisé en ce que**
un ensemble (51) de mesure de température qui présente plusieurs sondes de température (31, 32, 33, 34, 35; 36, 37, 39, 39, 40, 41, 42) disposées en des emplacements régulièrement répartis en matrice et par lesquels les températures de l'air ou du gaz ascendant sont mesurées est prévu sensiblement dans un plan situé au-dessus des appareils (17, 17a, 19).

2. Ensemble selon la revendication 1, **caractérisé en ce qu'**il présente un support (30, 70) sur lequel les sondes de température (31, 32, ...; 36, 37, ...; 55, 56, 57; 74, 75) sont placées.

3. Ensemble selon la revendication 2, **caractérisé en ce que** les sondes de température (31, 32, ...; 36, 37, ...; 55, 56, 57; 74, 75) sont disposées en forme de réseau ou de grille sur le support (30, 70) de telle sorte que les sondes de température soient réparties de manière régulière au-dessus du boîtier (10).

4. Ensemble selon la revendication 3, **caractérisé en ce que** les sondes de température (31, 32, ...; 36, 37, ...; 55, 56, 57; 74, 75) sont disposées en rangées longitudinales et transversales au-dessus du boîtier, les rangées longitudinales et transversales s'étendant sensiblement parallèlement et transversalement par rapport à la paroi avant du boîtier.

5. Ensemble selon la revendication 4, **caractérisé en ce que** le support (30, 70) est une carte de circuit.

6. Ensemble selon la revendication 4, **caractérisé en ce que** le support (30, 70) est un film.

7. Ensemble selon l'une des revendications précédentes, **caractérisé en ce que** le support (30, 70) présente la forme d'une grille aux points de grille de laquelle les sondes de température (31, 32, ...; 36, 37, ...; 55, 56, 57; 74, 75) sont fixées.

8. Ensemble selon la revendication 7, **caractérisé en ce que** les fils de résistance présentent le même diamètre ou des diamètres différents et/ou la même longueur ou des longueurs différentes.

9. Ensemble selon la revendication 5, **caractérisé en ce que** les fils de résistance sont formés d'un même matériau qui présente le même diamètre ou des diamètres différents et/ou la même longueur ou des longueurs différentes.

10. Ensemble selon l'une des revendications 1 à 9, **caractérisé en ce que** les fils de résistance sont disposés en grille ou en réseau.

11. Ensemble selon l'une des revendications 1 à 9, **caractérisé en ce que** pour former des longueurs différentes, des premiers fils de résistance sont configurés en boucles (55, 56, 57) qui entourent une forme de préférence en quadrilatère plat, les premiers bords latéraux (62, 63, 64) de chaque forme plate étant situés à proximité mutuelle et les deuxièmes bords latéraux (59, 60, 61) s'étendant parallèlement à ceux-ci s'étendent à distance mutuelle de telle sorte que ces deuxièmes bords latéraux (59, 60, 61) soient répartis sur le boîtier.

12. Ensemble selon la revendication 11, **caractérisé en ce qu'**en plus des premiers fils de résistance, des deuxièmes fils de résistance sont prévus dont les premiers et les deuxièmes bords latéraux s'étendent à la perpendiculaire des premiers et des deuxièmes bords latéraux des premiers fils de résistance.

13. Utilisation du dispositif selon l'une des revendications précédentes dans une armoire de raccordement électrique à basse tension, en particulier dans un tiroir (10) d'une armoire de raccordement à basse tension, dans lequel les températures des différents appareils électriques (17, 17a, 19) sont surveillées de telle sorte que si les températures de l'air qui balaye les sondes de température ou du gaz qui balaye les sondes de température dépassent une valeur de seuil, un signal d'alarme est délivré par une unité d'évaluation.
